# FASCICULE DE BREVET EUROPEEN

(11) **EP 0 862 000 B1**
(45) Date de publication et mention de la délivrance du brevet: **15.01.2003**
(21) Numéro de dépôt: 98200335.2
(22) Date de dépôt: 09.02.1998
(51) Int. Cl.: F16K 1/30

(54) **Robinet à gaz**
Gashahn
Gas cock

(30) Priorité: 24.02.1997 LU 90029
(43) Date de publication de la demande: 02.09.1998
(73) Titulaire: LUXEMBOURG PATENT COMPANY S.A., 1720 Luxembourg (LU)
(72) Inventeur: Kerger, Léon, 7382 Helmdange (LU)
(74) Mandataire: Meyers, Ernest

(56) Documents cités:
- EP-A- 0 486 945
- DE-A- 1 906 066
- DE-C- 742 732
- FR-A- 1 472 848

## Description

La présente invention concerne un robinet à gaz comprenant un corps avec un organe d'ouverture et de fermeture intérieur coopérant avec un siège d'étanchéité, un élément de manoeuvre extérieur et une tige de liaison pour transmettre le mouvement de l'élément de manoeuvre à l'organe d'ouverture et de fermeture.

L'invention vise plus particulièrement des robinets qui doivent répondre aux critères de sécurité les plus sévères et qui doivent être facilement maniables, tel que, par exemple, des robinets pour bouteilles à gaz utilisées dans le domaine hospitalier. Pour des raisons de sécurité, il est souhaitable que l'organe de fermeture de ces robinets soit disposé de manière à être sollicité par la pression du gaz dans le sens de la fermeture. Ceci signifie toutefois que, pour ouvrir le robinet, il faut vaincre la force exercée par la pression du gaz sur l'organe de fermeture. La force requise pour l'ouverture du robinet peut ainsi devenir très importante lorsque la pression du gaz dans la bouteille est élevée. Autrement dit, la facilité de manoeuvre et les règles de sécurité très strictes ne sont pas toujours des critères facilement conciliables.

Le document FR A 1 472 848 présente un robinet ayant les caractéristiques exposées dans le préambule de la revendication.

Le but de la présente invention est de prévoir un nouveau robinet à gaz, notamment pour bouteilles à pression élevée, qui est facilement maniable et qui répond aux critères de sécurité les plus strictes.

Pour atteindre cet objectif, l'invention propose un robinet du genre décrit ci-dessus qui est caractérisé en ce que l'organe d'ouverture et de fermeture est disposé de manière à être maintenu sur le siège d'étanchéité sous l'effet de l'élément de manoeuvre et de la pression du gaz et en ce que la tige de liaison et/ou l'organe et de fermeture sont conçus de manière à ce que l'ouverture du robinet comporte une première phase de pivotement de l'organe d'ouverture et de fermeture suivie d'un mouvement de translation axiale.

La phase initiale de pivotement sert à établir une ouverture limitée entre l'organe d'ouverture et de fermeture et à réaliser, ainsi, un équilibrage immédiat de la pression de part et d'autre de l'organe d'ouverture et de fermeture. La force nécessaire à faire pivoter ainsi l'organe d'ouverture est beaucoup moins élevée que celle qu'il faut pour le dégager parallèlement de son siège. Dès qu'il y équilibrage de la pression, il n'y a plus de résistance à l'ouverture par suite de la pression des gaz.

Selon le mode de réalisation, la tige de liaison est légèrement voilée de sorte que la direction de la force de poussée fait un angle avec l'axe du siège d'étanchéité.

D'autres particularités et caractéristiques de l'invention ressortiront de la description détaillée du mode de réalisation avantageux présenté ci-dessous, à titre d'illustration, en référence au dessin annexé, qui représente une vue partiellement en coupe axiale du mode de réalisation d'un robinet selon la présente invention.

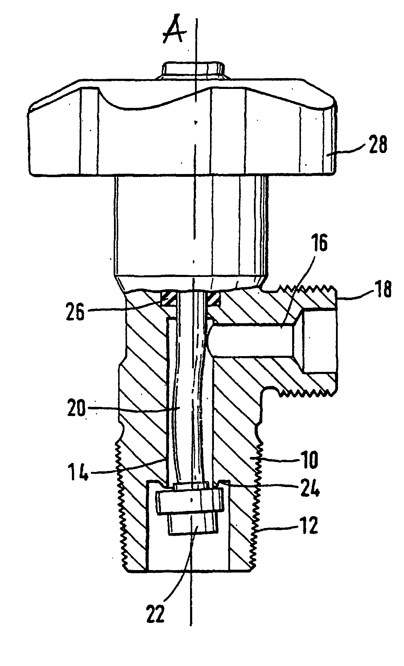

Le robinet représenté sur la figure 1 comporte un corps 10, par exemple métallique dont la partie inférieure est dotée d'un filet 12 lui permettant d'être vissée sur une bouteille à gaz non représentée. Le corps 10 est traversé par un canal axial 14 en communication avec un canal de sortie radiale 16 traversant un raccord 18 sur lequel peut être branché un circuit d'utilisation non montré.

Le canal axial 14 est traversé par une tige 20 dont l'extrémité inférieure porte un organe d'ouverture et de fermeture 22 qui coopère avec un siège d'étanchéité 24 entourant l'extrémité inférieure du canal 14. L'axe du siège 24 et du canal 14 est représenté par A. Étant donné que le siège 24 est disposé au-dessus de l'organe de fermeture 22, celui-ci est sollicité, en position fermée, par la pression du gaz sur le siège 24. Ainsi, lorsqu'en cas d'accident, le robinet se brise au-dessus de la bouteille, il n'y a pas de fuite de gaz.

La partie supérieure de la tige 20 travers un presse-étoupe 26 qui assure l'étanchéité vers l'extérieur lorsque le robinet est ouvert. La tige 20 est déplacée axialement par la rotation d'un volant de manoeuvre 28.

Comme on peut le voir sur la figure 1, la tige 20 est légèrement voilée, la courbure ayant toutefois été exagérée sur la figure pour être mieux visible. De cette manière, lors de l'ouverture, la direction de la force de poussée sur l'organe d'ouverture et de fermeture fait un angle, certes très petit, avec l'axe A du canal 14. Cet angle suffit pour soulever l'organe 22 obliquement de son siège 24 et créer ainsi une ouverture locale limitée visible à gauche entre le siège 24 et l'organe d'ouverture et de fermeture 22. Cette ouverture, dès qu'elle se forme, permet un équilibrage immédiat de la pression de part et d'autre de l'organe de fermeture et d'ouverture 22.

La tige 20 possède, par ailleurs, une certaine flexibilité pour lui permettre, lors de la fermeture, de céder légèrement sous l'effet de la traction, pour appliquer l'organe d'ouverture et de fermeture à plat sur le siège 24.

## Revendications

1. Robinet à gaz comprenant un corps (10) avec un organe d'ouverture et de fermeture intérieur (22) coopérant avec un siège d'étanchéité (24), un élément de manoeuvre extérieur (28) et une tige de liaison (20) pour transmettre le mouvement de l'élément de manoeuvre (28) à l'organe d'ouverture et de fermeture (22), dans lequel l'organe d'ouverture et de fermeture (22) est disposé de manière à être maintenu sur le siège d'étanchéité (24) sous l'effet de l'élément de manoeuvre (28) et de la pression du gaz, **caractérisé en ce que** la tige de liaison (20) est légèrement voilée, de sorte que la direction de la force de poussée à l'ouverture fait un angle avec l'axe (A) du siège d'étanchéité (24).

## Patentansprüche

1. Gashahn mit einem Gehäuse (10), einem inneren Öffnungs- und Schliessorgan (22), das mit einem Dichtungssitz (24) zusammenwirkt, einem äusseren Betätigungselement (28) und einer Verbindungsspindel (20) um die Bewegung des Betätigungs-elementes (28) auf das Öffnungs- und Schliessorgan (22) zu übertragen in welchem das Öffnungs- und Schliessorgan (22) so angeordnet ist, dass es unter der Wirkung des Betätigungs-elementes (28) und des Gasdrucks auf dem Dichtungssitz (24) gehalten wird, **dadurch gekennzeichnet, dass** die Verbindungs-spindel leicht gebogen ist, so dass beim Öffnen die Richtung der Druckkraft einen Winkel mit der Achse (A) des Dichtungssitzes (24) macht.

## Claims

1. Gas tap comprising a body (10) with an internal opening and closure member (22) interacting with a sealing seat (24), an external operating element (28) and a connecting stem (20) for transmitting the movement of the operating element (28) to the opening and closure member (22), whereby the opening and closure member (22) is arranged in such a way as to be held against the sealing seat (24) under the effect of the operating element (28) and the pressure of the gas, **characterized in that** the connecting stem (20) is slightly bent so that the direction of the thrusting force at the opening makes an angle with the axis (A) of the sealing seat (24).
